Europäisches Patentamt

European Patent Office

Office européen des brevets

(19)

(11) **EP 1 033 479 B1**

(12) **EUROPEAN PATENT SPECIFICATION**

(45) Date of publication and mention
of the grant of the patent:
**21.07.2004 Bulletin 2004/30**

(51) Int Cl.⁷: **F01N 3/20**, B01D 53/94

(21) Application number: **00104359.5**

(22) Date of filing: **02.03.2000**

(54) **A method for purifying combustion exhaust gas**

Verfahren zur Reinigung von Verbrennungsabgasen

Procédé pour la purification de gaz de combustion

(84) Designated Contracting States:
**DE FR GB IT**

(30) Priority: **03.03.1999 JP 5555499**

(43) Date of publication of application:
**06.09.2000 Bulletin 2000/36**

(73) Proprietor: **TOYOTA JIDOSHA KABUSHIKI KAISHA**
**Aichi-ken 471-8571 (JP)**

(72) Inventors:
 • **Yanagihara, Hiromichi**
  **Toyota-shi, Aichi-ken 471-8571 (JP)**
 • **Tsukasaki, Yukihiro**
  **Toyota-shi, Aichi-ken 471-8571 (JP)**
 • **Ishiyama, Shinobu**
  **Toyota-shi, Aichi-ken 471-8571 (JP)**
 • **Kobayashi, Masaaki**
  **Toyota-shi, Aichi-ken 471-8571 (JP)**
 • **Tahara, Jun**
  **Toyota-shi, Aichi-ken 471-8571 (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**EP-A- 0 503 882**     **DE-A- 19 510 804**

 • **PATENT ABSTRACTS OF JAPAN vol. 017, no. 168 (M-1391), 31 March 1993 (1993-03-31) & JP 04 330314 A (ISUZU MOTORS LTD), 18 November 1992 (1992-11-18)**

EP 1 033 479 B1

**Description**

TECHNICAL FIELD

The present invention relates to a method for purifying combustion exhaust gas. More specifically, the present invention relates to a method which is capable of purifying $NO_x$ (nitrogen oxide) in combustion exhaust gas having an air excess ratio higher than 1.0.

BACKGROUND ART

A $NO_x$ absorbing and reducing catalyst and a $NO_x$ selective reduction catalyst are known as exhaust gas purifying catalysts which can be used for purifying $NO_x$ in a combustion exhaust gas having an excess air ratio larger than 1.0 (in this specification, the excess air ratio means the ratio between the amount of air in a combustion process and the amount of air theoretically required for completely oxidizing fuel. Therefore, an excess air ratio larger than 1.0 means that the air-fuel ratio of combustion exhaust gas is a lean air-fuel ratio).

A $NO_x$ absorbing and reducing catalyst carries components such as Barium (Ba) and precious metal such as platinum (Pt) on a substrate made of a material such as alumina. The $NO_x$ absorbing and reducing catalyst absorbs $NO_x$ (such as $NO_2$ and NO) in the combustion exhaust gas and holds the same in the form of nitric acid ions $NO_3^-$ in the $NO_x$ absorbing and reducing catalyst when the air-fuel ratio of the exhaust gas supplied to the catalyst is a lean air-fuel ratio, and releases the absorbed $NO_x$ when the oxygen concentration in the exhaust gas supplied to the catalyst becomes low.

For example, when exhaust gas having a lean air-fuel ratio is fed to the $NO_x$ absorbing and reducing catalyst, $NO_x$ in the exhaust gas is absorbed by the catalyst and, thereby, $NO_x$ is removed from the exhaust gas. Further, when a reducing agent such as hydrocarbon (HC) is supplied to the $NO_x$ absorbing and reducing catalyst after it has absorbed $NO_x$, the reducing agent burns on the $NO_x$ absorbing and reducing catalyst. Since the oxygen concentration in the atmosphere of the catalyst is lowered by the combustion of the reducing agent, this causes the $NO_x$ absorbed in the catalyst to be released therefrom and, the released $NO_x$ is reduced to $N_2$ on the $NO_x$ absorbing and reducing catalyst by the reducing agent in the exhaust gas.

On the other hand, a selective reduction catalyst includes catalytic components such as copper (Cu) or platinum (Pt) attached to a substrate made of zeolite by an ion exchange process or impregnating process. The selective reduction catalyst is capable of selectively reacting $NO_x$ in the exhaust gas with HC (hydrocarbons) and CO (carbon monoxide) in the exhaust gas even when the air-fuel ratio of the exhaust gas is a lean air-fuel ratio. Namely, if the exhaust gas supplied to the selective reduction catalyst contains an appropriate amount of HC and CO, HC and CO are adsorbed in small pores in the zeolite substrate. Further, in a lean air-fuel ratio atmosphere, $NO_x$ in the exhaust gas attaches to the surface of the metal components such as Cu and Pt. The HC, CO adsorbed in pores in the zeolite substrate come out when the temperature of the zeolite substrate rises to a certain temperature range and selectively react with $NO_x$ attached to the surface of Cu and Pt, whereby $NO_x$ in the exhaust gas is purified by reduction.

An example of the exhaust gas purification device using such exhaust purifying catalyst is disclosed, for example, in Japanese Unexamined Patent Publication (Kokai) No. 4-330314. In the device in the '314 publication, a selective reduction catalyst is disposed in an exhaust gas passage of a diesel engine and used as an exhaust gas purifying catalyst. As a reducing agent, fuel is injected into the exhaust gas passage at the portion upstream of the selective reduction catalyst. In the device, the amount of fuel injected into the exhaust gas is controlled in accordance with the concentration of HC in the exhaust gas when the temperature of the selective reduction catalyst becomes higher than the activating temperature of the catalyst in such a manner that an appropriate amount of HC for reducing $NO_x$ in the exhaust gas is supplied to the catalyst when the catalyst is in a temperature range where it is activated. Thus, $NO_x$ in the exhaust gas from the diesel engine having a lean air-fuel ratio is reduced to $N_2$ by HC adsorbed in the selective reduction catalyst.

However, in general, when a selective reduction catalyst is used for reducing $NO_x$ in the exhaust gas having a lean air-fuel ratio, it is difficult to achieve a high reduction efficiency of $NO_x$. This is because, as the catalytic component such as Cu and Pt used for selective reduction catalyst also act as oxidizing catalytic components, HC tends to react with oxygen in the exhaust gas, rather than with $NO_x$, when the air-fuel ratio of the exhaust gas is a lean air-fuel ratio. Namely, when HC is supplied to the selective reduction catalyst in a lean air-fuel ratio atmosphere, a large portion of the HC supplied to (and HC come out from the pores of) the selective reduction catalyst burns on the catalyst and forms $H_2O$ and $CO_2$ and, thereby, the reaction between HC and $NO_x$ hardly occurs on the selective reduction catalyst. Therefore, it is difficult to obtain a high $NO_x$ reduction efficiency by using the selective reduction catalyst.

On the other hand, if the $NO_x$ absorbing and reducing catalyst is used, a higher $NO_x$ reduction efficiency is obtained since the reduction of $NO_x$ is carried out in a reducing atmosphere (i.e., in a lean air-fuel ratio atmosphere). However, when the $NO_x$ absorbing and reducing catalyst is used, it is required to lower the air-fuel ratio of the exhaust gas supplied to the $NO_x$ absorbing and reducing catalyst to a value less than 1.0 (i.e., to a rich air-fuel ratio) in order to cause the $NO_x$ absorbing and reducing catalyst to release the absorbed $NO_x$ and to reduce the same. Therefore, for example, when a gasoline engine usually operated at a lean air-fuel ratio is used, the engine must be operated at a rich air-fuel ratio for a short period in order to lower the air-fuel ratio of the exhaust gas supplied to the $NO_x$ absorbing and reducing catalyst. Further, when a diesel engine is used, since it is difficult to operate a diesel engine at a rich air-fuel ratio, a large amount of reducing agent or fuel must be injected into the exhaust gas in order to lower the air-fuel ratio of the exhaust gas supplied to the $NO_x$ absorbing and reducing catalyst to a rich air-fuel ratio. These operations for lowering the air-fuel ratio of the exhaust gas to a desired air-fuel ratio requires a relatively complicated control of the engine or a reducing agent supply system.

Another example of such an exhaust gas purification device is disclosed in the European Patent Application EP 0503882 A. In the device of the '882 publication, a exhaust purifying catalyst carrying a transition or noble metal is disposed in an exhaust passage of a lean burn engine. When the catalyst temperature is below a predetermined value (e.g. 400°C), a situation which repeatedly occurs in actual car operation, the amount of HC flowing to the catalyst is increased and an oxidizing atmosphere is provided by operating the engine at lean air-fuel ratios. The resulting low temperature partial oxidation of HC produces radicals which are held within the catalyst cells and raises the $NO_x$ purification rate of the catalyst for a transient period of time. When the engine is operated at a high load, the catalyst temperature rises again and the radicals adsorbed in the cells come out and further increase the $NO_x$ purification rate until they are consumed.

Finally, it is referred to the German Patent Application DE 19510804 A. The '804 publication describes laboratory tests with an exhaust purifying catalyst for purifying combustion exhaust gas by reducing $NO_x$ under oxidizing gas conditions in the presence of an reducing agent. Although it is assumed that radicals play an important role in the purification process, the laboratory tests did not show sufficient $NO_x$ purification rates at temperatures which are typical for the exhaust gas of diesel engines. Therefore it is proposed to increase the $NO_x$ purification rate by bringing the reducing agent into a high-pressure plasma state before supplying it to the catalyst.

DISCLOSURE OF INVENTION

In view of the related art as set forth above, the object of the present invention is to provide a method for purifying combustion exhaust gas capable of continuously maintaining a high $NO_x$ reduction efficiency.

The above object is achieved by a method according to claim 1. The dependent claims define developments of the invention.

BRIEF DESCRIPTION OF THE DRAWINGS

The present invention will be better understood from the description as set forth hereinafter, with reference to the accompanying drawings in which:

Fig. 1 schematically illustrates the general configuration of an exhaust gas purification device which utilizes a first embodiment of the purification method of the exhaust gas according to the present invention;

Fig. 2 schematically illustrates the general configuration of an exhaust gas purification device which utilizes a second embodiment of the purification method of the exhaust gas according to the present invention;

Figs. 3 schematically illustrates the general configuration of an exhaust gas purification device which utilizes a third embodiment of the purification method of the exhaust gas according to the present invention;

Fig. 4 schematically illustrates the general configuration of an exhaust gas purification device which utilizes a fourth embodiment of the purification method of the exhaust gas according to the present invention; and

Fig. 5 schematically illustrates the general configuration of an exhaust gas purification device which utilizes a fifth embodiment of the purification method of the exhaust gas according to the present invention.

DESCRIPTION OF THE PREFERRED EMBODIMENT

Hereinafter, embodiments of the present invention will be explained in detail with reference to the accompanying drawings.

In the embodiments explained hereinafter, an exhaust gas purifying catalyst purifies $NO_x$ in the exhaust gas by using hydrocarbon radicals produced from reducing agent (such as fuel) supplied to the catalyst. The exhaust purifying catalyst used in the embodiments has the construction and catalytic components similar to those of known exhaust gas purifying catalysts. However, the exhaust gas purifying catalyst in the present invention functions in a temperature range completely different from the temperature range where conventional exhaust gas purifying catalysts are used and, in this specific temperature range, the exhaust gas purifying catalyst in the present invention achieves a $NO_x$ reduction efficiency much higher than that of the conventional exhaust gas purifying catalyst.

Therefore, in order to discriminate the exhaust gas purifying catalyst in the present invention from the conventional catalyst, the exhaust gas purifying catalyst in the present invention is referred to as a RAP (Radical Active Process) catalyst" in the explanation below.

Next, the $NO_x$ purification (reduction) function of the RAP catalyst will be explained.

The RAP catalyst is a catalyst containing oxidizing catalytic components such as platinum (Pt) and palladium (Pd). Therefore, both a selective reduction catalyst and a $NO_x$ absorbing and reducing catalyst can be used as a RAP catalyst in certain conditions. Usually, a selective reduction catalyst and a $NO_x$ absorbing and reducing catalyst are used in temperature range higher than an activated temperature where the oxidizing capability of the oxidizing catalytic components becomes sufficiently high (for example, in the temperature range more than 300°C). Therefore, as explained before, when the reducing agent (for example, fuel) is supplied to the catalyst in the temperature range higher than the activated temperature, the supplied reducing agent burns on the catalyst and forms $H_2O$ and $CO_2$.

In contrast to this, the RAP catalyst is used in a temperature range lower than the activated temperature of the oxidizing catalytic components in order to cause a low temperature oxidizing reactions of hydrocarbons. When the reducing agent is supplied to the RAP catalyst in a specific temperature range, hydrocarbons in the reducing agent (fuel) produces intermediate hydrocarbon oxides by the low temperature oxidizing reactions. The produced intermediate hydrocarbon oxides are, then converted into hydrocarbon radicals such as aldehyde radical, carboxylic radical and alcoholic radical etc. Since these radicals have high reaction activities and especially have high affinity for chemically unstable substances such as $NO_x$ these radicals react with $NO_x$ rather than oxygen even in an oxidizing atmosphere.

When hydrocarbons R ⁻ H (R designates such as methyl and aldehyde and H designates hydrogen) are supplied to the RAP catalyst in an oxidizing atmosphere (the atmosphere contains ample oxygen), hydrocarbons are oxidized by the following reaction to produce intermediate hydrocarbon oxide RO.

$$R^{-}H + O_2 \rightarrow RO + OH$$

This intermediate hydrocarbon oxide RO is further oxidized on the oxidizing catalytic components such as Pt and is converted into hydrocarbon radical R· by the reaction

$$RO \rightarrow R\bullet.$$

The produced hydrocarbon radical R· selectively reacts with $NO_x$ (such as $NO_2$ and NO) and produces hydrocarbon oxide $RO_2$ by removing oxygen from $NO_x$ by the following reaction.

$$R\cdot + NO_x \rightarrow RO_2 + N_2$$

By this reaction, $NO_x$ is reduced to $N_2$.

It is true that intermediate hydrocarbon oxide is also produced by oxidizing reactions of hydrocarbons in the temperature range higher than the activated temperature of the oxidizing catalytic components. However, since oxidizing ability of the oxidizing catalytic components is much higher in the temperature range higher than the activated temperature, the produced intermediate hydrocarbon oxide is immediately oxidized to the final hydrocarbon oxide $RO_2$ in an oxidizing atmosphere. Therefore, substantially no hydrocarbon radical R· is produced by the oxidizing reaction (combustion) of hydrocarbons when the temperature of the catalyst is high.

In this specification, the reaction producing hydrocarbon radical R· as explained above is referred to as "a low temperature oxidizing reaction". The low temperature oxidizing reaction in this specification is also defined as an oxidizing reaction which is not accompanied by combustion of hydrocarbons, or an oxidizing reaction of hydrocarbons in the temperature range where the amount of heat generated by the reaction is smaller than the characteristic heat value of the reacted hydrocarbons.

As explained above, oxygen is required for producing intermediate hydrocarbon oxide in the low temperature oxidizing reactions. Further, the produced radicals vigorously react with $NO_x$ and reduce it to $N_2$ even in an oxidizing atmosphere. Therefore, by causing the low temperature oxidizing reactions on the RAP catalyst disposed in the exhaust gas having an excess air ratio larger than 1.0, $NO_x$ in the exhaust gas is purified by the radicals produced by the low temperature oxidizing reactions.

In contrast to the fact that a conventional selective reduction catalyst can achieve only a low $NO_x$ reduction efficiency since it reduces $NO_x$ in an oxidizing atmosphere, the RAP catalyst is capable of reducing $NO_x$ in an oxidizing atmosphere at a high $NO_x$ reduction efficiency since the radicals selectively react with $NO_x$ even in an oxidizing atmosphere. Further, a conventional $NO_x$ absorbing and reducing catalyst requires an excess air ratio of the exhaust gas to be lower than 1.0 in order to release and reduce $NO_x$. Therefore, a complicated control for changing the excess air ratio of the exhaust gas is inevitable when a conventional $NO_x$ absorbing and reducing catalyst is used. In this point, the RAP catalyst is also advantageous since the RAP catalyst can reduce $NO_x$ in the exhaust gas while keeping the excess air ratio of the exhaust gas at a fixed value larger than 1.0.

From the explanation set forth above, it will be understood that the following conditions are required for the RAP catalyst in order to obtain a high $NO_x$ reduction efficiency:

> (1) The low temperature oxidizing reactions occur on the catalyst; and
> (2) Hydrocarbon radicals are continuously produced by the low temperature oxidizing reactions. It is preferable to adjust the conditions for the reaction such as (A) the temperature of the RAP catalyst, (B) the excess air ratio of the exhaust gas and (C) the supply conditions of the reducing agent in a specific range in order to satisfy the conditions (1) and (2). Therefore, hereinafter these conditions for the reaction will be explained in detail.

(A) The temperature of the RAP catalyst

As explained before, the reducing agent such as fuel burns on the catalyst and produces final hydrocarbon oxide such as $CO_2$ without producing hydrocarbon radicals in the condition where the oxidizing ability of the catalyst is high. Therefore, the RAP catalyst must be used in the temperature range where the oxidizing ability of the catalyst is relatively low, i.e., the temperature range lower than the activated temperature of the oxidizing catalytic components. However, if the temperature of the catalyst is too low, the oxidizing reaction itself does not occur. Further, as long as the reducing agent supplied to the RAP catalyst maintains its liquid phase, a chemical reaction hardly occurs. Therefore, the reducing agent supplied to the RAP catalyst must be vaporized at least when the low temperature oxidizing reactions occur. This requires the temperature of the RAP catalyst to be higher than the boiling point of the supplied reducing agent. In addition to that, though the production rate of the hydrocarbon radicals increases as the temperature of the RAP catalyst becomes higher within the temperature range where the low temperature oxidizing reactions occur, all the reducing agent supplied to the catalyst is converted into the hydrocarbon radicals at once due to excessively high production rate of radicals when the temperature of the catalyst is high. If all the reducing agent is converted into the hydrocarbon radicals at once, the production of the radicals on the catalyst is aborted temporarily due to a shortage of the reducing agent supplied to the catalyst. Further, though a large amount of the radicals is produced on the catalyst when the production rate of the radicals is excessively high, the radicals produced do not remain on the catalyst for a long time. Namely, even if a large amount of the radicals is produced, the excess amounts of radicals which do not react with the $NO_x$ in the exhaust gas dissipate by reacting with $O_2$ in the exhaust gas. Therefore, when the production rate of the radicals is excessively high, i.e., the rate of the low temperature oxidizing reactions is too high, a state in which the hydrocarbon radicals do not exist on the RAP catalyst temporarily occurs. In this state, $NO_x$ in the exhaust gas cannot be purified. Thus, in order to achieve a high $NO_x$ reduction efficiency, the temperature of the RAP catalyst must be in the range where the rate of the low temperature oxidizing reactions becomes relatively low.

From the above consideration, the temperature of the RAP catalyst suitable for $NO_x$ purification is lower than the activated temperature of the oxidizing catalytic components of the RAP catalyst and, at the same time, higher than the boiling point of the liquid reducing agent. In addition to that, the temperature of the RAP catalyst must be in the range where the low temperature oxidizing reactions occur at a relatively low reaction rate.

Though the suitable temperature range explained above varies in accordance with the kind of the catalytic component and the reducing agent, the lower limit of the suitable temperature range is about 170°C when, for example, diesel fuel (light oil) is used as the reducing agent.

The higher limit of the suitable temperature range becomes lower as the oxidizing ability of the catalyst becomes higher and becomes higher as the oxidizing ability of the catalyst becomes lower. Further it was found that the higher limit of the suitable temperature range may be increased by using catalytic components having a reducing ability (such as rhodium Rh) together with the catalytic components having a high oxidizing ability even when catalytic components having a high oxidizing ability are used. When the catalytic components having a reducing ability (reducing catalytic components) are used in addition to the catalytic components having an oxidizing ability (oxidizing catalytic components), the oxidizing ability of the oxidizing catalytic components is suppressed by the reducing ability of the reducing catalytic components and the oxidizing ability of the RAP catalyst as a whole becomes relatively low. Especially, if the amounts of the oxidizing catalytic components and the reducing catalytic components used for the RAP catalyst are selected in such a manner that the oxidizing ability of the oxidizing catalytic components and the reducing ability of the reducing catalytic components nearly balances, the upper limit of the suitable temperature range can be largely increased. For example, when the RAP catalyst uses only oxidizing catalytic components such as Pt and Pd, the low temperature oxidizing reactions do not occur in the temperature range above the activated temperature (around 300°C). However, if reducing catalytic components such as Rh are used in the RAP catalyst in addition to the same oxidizing catalytic components, the upper limit of the temperature range where the low temperature oxidizing reactions occur rises up to about 430°C.

Therefore, it is concluded that the suitable temperature range of the RAP catalyst for purifying $NO_x$ in the exhaust gas is approximately between 170 to 430°C.

(B) The excess air ratio of the exhaust gas

The low temperature oxidizing reactions requires oxygen in order to produce hydrocarbon radicals. Therefore, the excess air ratio of the exhaust gas supplied to the RAP catalyst must be adjusted to a value higher than 1.0. On the other hand, the reaction rate of the low temperature oxidizing reactions becomes higher as the oxygen concentration in the exhaust gas is higher. Therefore, when the oxygen concentration in the exhaust gas is excessively high, all the reducing agent supplied to the RAP catalyst is converted into the hydrocarbon radicals at once due to high reaction rate of the low temperature oxidizing reactions. Similarly to the case where the temperature of the RAP catalyst is excessively high, this causes deterioration of the $NO_x$ reducing efficiency due to the shortage of the radicals. Therefore, the excess air ratio of the exhaust gas must be in a specific range larger than 1.0 in order to obtain a high $NO_x$ reduction efficiency.

Though the suitable excess air ratio range varies in accordance with the catalytic components used and the temperature of the RAP catalyst, it is found that the highest $NO_x$ reduction efficiency can be achieved when the excess air ratio of the exhaust gas is between 1.0 and 1.7 if the RAP catalyst uses Pt and Pd.

Since the operating air-fuel ratio of a normal diesel engine can be lowered to around 1.6, the excess air ratio range between 1.0 and 1.7 can be easily achieved by a normal diesel engine.

(C) The supply conditions of the reducing agent

As explained above, it is preferable that the reducing agent supplied to the RAP catalyst is not converted to hydrocarbon radicals at once, but continuously produces hydrocarbon radicals on the RAP catalyst at a relatively low reaction rate. For this purpose, it is preferable that the reducing agent supplied reaches the RAP catalyst in a liquid form rather than in a gaseous form because, if the reducing agent reaches the RAP catalyst in a gaseous form, the rate of the reaction on the RAP catalyst becomes excessively high and an immediate conversion of the reducing agent into hydrocarbon radicals may occur. If the reducing agent reaches the RAP catalyst in a liquid form, an evaporation of the reducing agent occurs before the low temperature oxidizing reactions occur. Therefore, the reducing agent supplied to the catalytic components reacts at a relatively low rate through the evaporation process. Thus, by supplying the reducing agent in a liquid form, the production rate of the hydrocarbon radicals is lowered and, thereby the radicals are continuously produced on the RAP catalyst.

The conditions for obtaining a high $NO_x$ reduction efficiency using RAP catalysts as explained above are summarized as follows.

(A) The temperature of the RAP catalyst is maintained at a specific temperature range where the low temperature oxidizing reactions occur (for example, the temperature in the range 170°C to 430°C). This suitable temperature range is higher than the boiling point of the reducing agent used and, at the same time, lower than the activated temperature of the catalytic components having an oxidizing ability.

(B) The excess air ratio of the exhaust gas supplied to the RAP catalyst is maintained in the range where the production rate of the hydrocarbon radicals does not become excessively high (for example, the excess air ratio in the range 1.0 to 1.7).

(C) A liquid reducing agent is used, and the reducing agent reaches the RAP catalyst in the liquid phase.

In the embodiments of the present invention explained hereinafter, a high $NO_x$ reduction efficiency is achieved by satisfying the conditions (A) to (C) listed above.

[1] The first embodiment

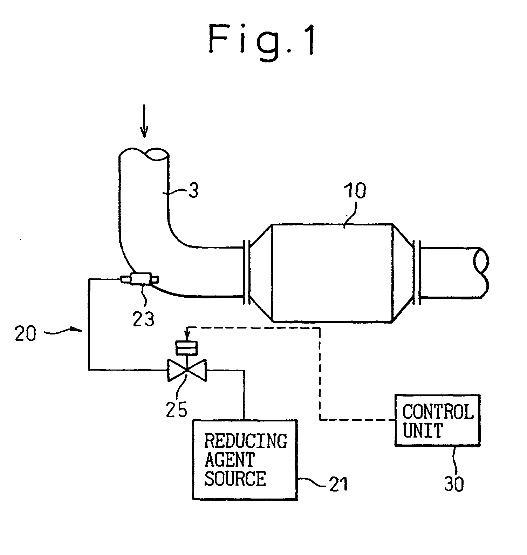

Fig. 1 illustrates a general configuration of the exhaust gas purification device using an embodiment of the method according to the present invention.

In Fig. 1, reference numeral 3 designates an exhaust gas passage through which combustion exhaust gas such as from an internal combustion engine or a furnace flows. Numeral 10 is a RAP catalyst disposed in the exhaust gas passage 3. In this embodiment, a reducing agent supply unit 20 which supplies a liquid reducing agent to the RAP catalyst 10 is disposed in the exhaust gas passage upstream of the RAP catalyst 10.

The reducing agent supply unit 20 includes a pressurized reducing agent supply source 21 such as a tank or a pump, a reducing agent injection nozzle 23 for injecting the reducing agent into the exhaust gas passage 3 upstream of the RAP catalyst 10. Numeral 25 designates a flow control valve for adjusting the flow of the reducing agent supplied to the RAP catalyst 10.

Any substance which evaporates on the catalyst 10 and produces hydrocarbons may be used as the reducing agent. In this embodiment, fuel having a relatively low volatility, such as kerosene or diesel fuel is used as the reducing agent. The reducing agent injection nozzle 23 is disposed near the RAP catalyst 10 so that the injected reducing agent reaches the RAP catalyst 10 in the form of liquid before it evaporates in the exhaust gas.

The RAP catalyst 10 used in the present embodiment has a construction similar to that of conventional Pt/Pd base selective reduction catalyst. Namely, the RAP catalyst 10 uses substrate made of porous zeolite (such as ZSM5), and oxidizing catalytic components such as platinum (Pt) and palladium (Pd) are attached to the substrate. The internal combustion engine or the furnace to which the exhaust gas passage is connected is controlled in such a manner that the excess air ratio of the exhaust gas passing through the exhaust gas passage 3 falls in the range 1.0 to 1.7. Further, the distance between the RAP catalyst 10 and the source of the exhaust gas such as the engine or furnace is set in such a manner that the temperature of the exhaust gas at the inlet of the RAP catalyst 10 falls to within a specific temperature range where the low temperature oxidizing reactions occur on the RAP catalyst 10. This specific temperature range is higher than the boiling point (for example, 170°C) of the reducing agent and lower than the activated temperature (for example, 300°C) of the oxidizing catalytic components on the RAP catalyst 10.

In this embodiment, the amount of the reducing agent injected from the nozzle 23 is controlled by adjusting the degree of opening of the flow control valve 23 using a control unit 30 consisting of, for example, a microcomputer. The amount of the reducing agent injected from the nozzle 23 is controlled in accordance with the flow rate of the exhaust gas in the exhaust gas passage 3 and the $NO_x$ concentration thereof.

When the reducing agent is injected from the nozzle 23, it reaches the RAP catalyst 10 in the form of liquid and evaporates on the RAP catalyst 10 at a relatively low evaporating rate. Since the temperature and the excess air ratio of the exhaust gas are adjusted to the range where the low temperature oxidizing reactions occur on the RAP catalyst 10, the reducing agent evaporated on the RAP catalyst 10 is converted to the hydrocarbon radicals via the intermediate hydrocarbon oxide. Further, since the produced radicals selectively react with $NO_x$ in the exhaust gas, $NO_x$ in the exhaust gas is purified (reduced) at a high $NO_x$ reduction efficiency.

The reducing agent may be injected from the nozzle 23 continuously, or intermittently by pulse-like injection. The substrate of the RAP catalyst 10 used in the present embodiment is capable of adsorbing hydrocarbons in the exhaust gas. Therefore, even if the reducing agent is injected from the nozzle 23 intermittently, a portion of the reducing agent injected from the nozzle 23 is adsorbed by the substrate of the RAP catalyst 10. This adsorbed reducing agent gradually comes out from the substrate in the period between the injections and produces hydrocarbon radicals, continuously, by the low temperature oxidizing reactions.

Further, though only oxidizing catalytic components such as Pt and Pd are used for the RAP catalyst 10, reducing catalytic components such as rhodium (Rh) may be added to the RAP catalyst 10. In this case, if the amount of Rh added to the RAP catalyst 10 is selected in such a manner that the oxidizing ability of the oxidizing catalytic components Pt, Pd and the reducing ability of the reducing catalytic component Rh balance as a whole, a high $NO_x$ reduction efficiency of the RAP catalyst 10 can still be achieved in a higher temperature range.

[2] The second embodiment

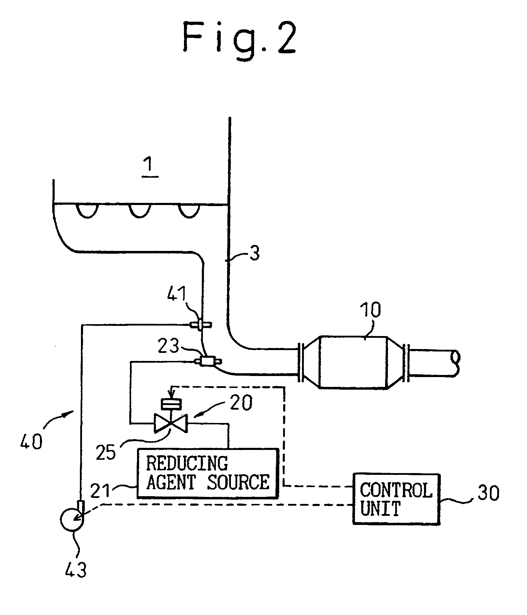

Fig. 2 illustrates a general configuration of the exhaust gas purification device using a second embodiment of the method according to the present invention.

In Fig. 2, reference numerals the same as those in Fig. 1 designate elements similar to those in Fig. 2.

In Fig. 2, the RAP catalyst 10 is disposed on an exhaust gas passage of an internal combustion engine (in this embodiment, a diesel engine). In this embodiment, diesel fuel, the same as the fuel used in the engine, is injected from the nozzle 23 of the reducing agent supply unit 20. Further, in this embodiment, a carrier air supply unit 40 is provided. The carrier air supply unit 40 includes an air nozzle 41 disposed on the exhaust gas passage 3 upstream of the reducing agent injection nozzle 23, and a pressurized air source 43 such as an air tank or an electric air pump capable of supplying carrier air to the exhaust gas passage 3 before the engine 1 starts.

In this embodiment, the reducing agent is supplied to the RAP catalyst 10 before the engine is started, for example, the period after the engine main switch is turned on and before the engine starting operation (such as cranking) begins. Namely, when the control unit 30 detects that the engine main switch is turned on, it activates the electric air pump 43 in order to supply carrier air from the nozzle 41. By injecting carrier air from the nozzle 41, injected air flows through the RAP catalyst 10 and through the exhaust gas passage 3. At the same time as the pump 43 is activated, the control unit 30 opens the flow control valve 25 in order to inject fuel from the nozzle 23. Thus, fuel injected from the nozzle 23 is carried by the air stream in the exhaust gas and reaches the RAP catalyst 10. Since the temperature of the RAP catalyst 10 is low before the engine 1 is started, fuel reaches the catalyst 10 in the liquid form. Therefore, fuel reaching the RAP catalyst 10 attaches to the surface of the RAP catalyst 10. The control unit 30 begins the starting operation of the engine after the injections of reducing agent and carrier air are continued for a predetermined period. The time required for injecting fuel and carrier air is determined by experiment in such a manner that the whole surface of the RAP catalyst 10 is covered by fuel injected from the nozzle 23.

By injecting reducing agent before the starting operation of the engine 1, the engine is started in the condition where the whole surface of the RAP catalyst 10 is covered by reducing agent. In this embodiment, the fuel injection amount of the engine 1 is set at a value such that the operating excess air ratio of the engine 1 is lower than normal diesel engines (for example, the operating excess air ratio of about 1.6). Further, the distance between the engine 1 and the RAP catalyst 10 is selected in such a manner that the temperature of the exhaust gas arriving at the RAP catalyst 10 during the operation of the engine 1 does not exceed the upper limit of the specific temperature range where the low temperature oxidizing reactions occur on the RAP catalyst 10.

When the exhaust gas of the engine 1 reaches the RAP catalyst 10 after the engine has started, the temperature of the RAP catalyst 10 rises and falls in the temperature range where the low temperature oxidizing reactions occur. In this temperature range, the reducing agent which covers the whole surface of the RAP catalyst 10 gradually evaporates. Further, since the excess air ratio of the exhaust gas of the engine 1 is controlled at about 1.6, the low temperature oxidizing reactions of the reducing agent occur over the entire surface of the catalyst 10 when the temperature of the RAP catalyst 10 rises to the required temperature range. Thus, hydrocarbon radicals are gradually produced on the entire surface of the RAP catalyst 10. Since the produced hydrocarbon radicals attach to the surface of the catalytic components such as Pt, Pd, the entire surface of the RAP catalyst 10 is covered with hydrocarbon radicals. The number of radicals covering the surface of the catalyst 10 decreases as the radicals are used for the reaction with $NO_x$. Therefore, if the reducing agent is not supplied to the catalyst 10 after the engine started, all of radicals on the surface of the catalytic components are used up by the reaction with $NO_x$. If the condition where radicals do not cover the catalytic components occurs, oxygen and $NO_x$ in the exhaust gas attach to the surface of the catalytic components in lieu of hydrocarbon radicals. When oxygen or $NO_x$ in the exhaust gas attach to the catalytic components, hydrocarbon radicals are hardly produced even if the reducing agent is supplied to the catalytic components. Therefore, in this embodiment, the injection of the reducing agent from the nozzle 23 is continued after the engine started in order to maintain the RAP catalyst 10 in the condition where the surface of the catalytic components are covered with hydrocarbon radicals. The amount of the reducing agent supplied to the RAP catalyst 10 after the engine has started is determined in such a manner that the amount of radicals used for reducing $NO_x$ can be continuously produced. Therefore, the RAP catalyst 10 is always covered with radicals, during the engine operation, over its entire surface. By maintaining the condition where the entire surface of the RAP catalyst 10 is covered with hydrocarbon radicals, a sufficient amount of hydrocarbon radicals become available even when the $NO_x$ concentration in the exhaust gas varies due to the change in the operating condition of the engine. Thus, the release of $NO_x$ into the atmosphere due to the change in the operating condition of the engine does not occur in this embodiment. In this embodiment, similarly to the previous embodiment, the injection of the reducing agent from the nozzle 23 may be carried out continuously or intermittently.

[3] The third embodiment

In this embodiment, an exhaust gas purification device the same as in Fig. 2 is used. However, the amount of hydrocarbon radicals produced on the RAP catalyst 10 is controlled by changing the operating condition of the engine and the supply amount of the reducing agent in accordance with the property of the reducing agent.

The production rate of hydrocarbon radicals changes in accordance with the property of the reducing agent even if other conditions, such as the temperature of the catalyst, the oxygen concentration and the amount of the reducing agent are not changed. For example, when diesel fuel is used as the reducing agent, it was found that the production rate of hydrocarbon radicals increases as the cetane number of fuel becomes larger even if other conditions are the same.

Therefore, if the supply conditions of the reducing agent are always fixed, the $NO_x$ reduction efficiency of the RAP catalyst 10 becomes low in some cases. For example, if diesel fuel having a cetane number lower than usual is used for the engine 1, the production rate of hydrocarbon radicals decreases accordingly and the shortage of hydrocarbon radicals may occur. In order to solve this problem, the conditions such as the temperature of the catalyst and the supply amount of the reducing agent are changed in accordance with the change in the cetane number of diesel fuel used for the engine 1.

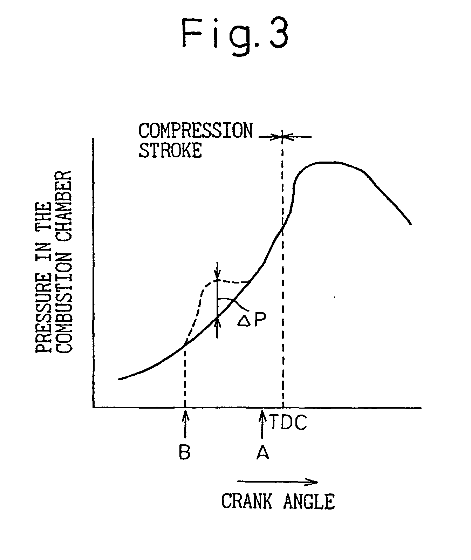

In this embodiment, the cetane number of fuel is detected by monitoring the firing pressure in the combustion chamber of the engine 1. Fig. 3 schematically illustrates the change in the pressure in the combustion chamber of a diesel engine during the compression stroke and the expansion stroke. As can be seen from Fig. 3, the pressure in the combustion chamber increases as the piston moves upward during the compression stroke. Further, when fuel is injected into the combustion chamber near the top dead center of the compression stroke (the point A in Fig. 3), the pressure in the combustion chamber rapidly increases due to the combustion of the injected fuel. In this case, the pressure in the combustion chamber smoothly increases until fuel is injected. The temperature is lower than the igniting temperature of fuel in the early stage of the compression stroke. Therefore, even if fuel is injected in the early stage of the compression stroke, combustion of fuel and the pressure rise accompanying thereto does not occur. Thus, it is considered that the pressure in the combustion chamber smoothly increases in the early stage of the compression stroke, as shown in Fig. 3 by the solid line, even if fuel is injected during this period. However, the actual pressure in the combustion chamber temporarily increases as shown in Fig. 3 by the broken line when fuel is injected in the early stage of the compression stroke (for example, at the point indicated by B in Fig. 3). After this temporary rise in the pressure, the pressure in the combustion chamber returns to the normal change (i.e., the change shown by the solid line in Fig. 3).

It is believed that the temporary pressure rise in Fig. 3 occurs due to the oxidizing reaction of linear hydrocarbons having a high cetane number in the injected fuel. Namely, when fuel is injected in the early stage of the compression stroke, linear hydrocarbons in fuel are partially oxidized and form intermediate oxides of hydrocarbons, and the pressure rises due to the heat produced by the oxidizing reaction. As the amount of the components having a low cetane number becomes larger, the amount of oxidized hydrocarbons increases. Therefore, the amount of the pressure rise ($\Delta P$ in Fig. 3) becomes larger as the cetane number of fuel increases. This means that the pressure difference $\Delta P$, i.e., the difference between the peak pressure during the temporary rise in the pressure and the normal pressure during the compression stroke can be used as a parameter representing the cetane number of fuel.

In this embodiment, a combustion pressure sensor which is capable of detecting combustion pressure in the combustion chamber is disposed in one of the cylinders of the engine. The cetane number of fuel used is periodically detected by injecting small amount of fuel in the early stage of the compression stroke and measuring the peak value of the temporary pressure rise in the combustion chamber by the combustion pressure sensor. The cetane number of fuel used is determined by calculating the difference $\Delta P$ between the measured peak pressure and the pressure of the normal pressure in the compression stroke.

Further, in this embodiment, the control unit 30 adjusts the conditions of the reaction on the RAP catalyst 10 based on the determined cetane number so that the required amount of hydrocarbon radicals are always produced on the RAP catalyst 10. For example, if the cetane number of fuel used is low, since the amount of hydrocarbon radicals produced on the RAP catalyst 10 decreases, the control unit 30 increases the amount of fuel injected from the nozzle 23 in order to prevent the shortage of hydrocarbon radicals from occurring on the RAP catalyst 10. Thus, the deterioration of the $NO_x$ reduction efficiency due to change in the property of fuel used can be prevented.

As explained before, the production rate of hydrocarbon radicals on the RAP catalyst 10 increases as the temperature of the RAP catalyst 10 becomes higher. Therefore, the temperature of the exhaust gas may be increased by changing the load condition of the engine 1 when the cetane number of the fuel is low. Further, since the production rate of the hydrocarbon radicals increases as the oxygen concentration in the exhaust gas becomes higher, the excess air ratio of the exhaust gas may be increased by reducing the fuel injection amount of the engine when the cetane number of fuel is low.

[4] The fourth embodiment

As explained before, the production rate or the production amount of hydrocarbon radicals changes in accordance with the temperature of the RAP catalyst and the oxygen concentration. However, since the temperature of the RAP catalyst and the oxygen concentration in the exhaust gas around the RAP catalyst are determined by the temperature and the excess air ratio of the exhaust gas if the RAP catalyst is disposed in the exhaust gas passage of an internal combustion engine. Therefore, the temperature and oxygen concentration in the exhaust gas around the RAP catalyst are determined by the operating condition of the engine. This means that the production rate of hydrocarbon radicals changes if the operating condition of the engine changes. Further, the production rate of the hydrocarbon radicals must be changed in accordance with the amount of $NO_x$ in the exhaust gas in order to achieve a high $NO_x$ reduction efficiency.

In this embodiment, the supply condition of the reducing agent is adjusted in accordance with the change in the conditions affecting the production rate of hydrocarbon radicals (for example, the temperature and the excess air ratio of the exhaust gas). Thus, in this embodiment, the change in the production rate of the hydrocarbon radicals due to the change in the operating condition of the engine is prevented. Further, in this embodiment, the production rate of hydrocarbon radicals on the RAP catalyst is adjusted in accordance with the amount of $NO_x$ in the exhaust gas.

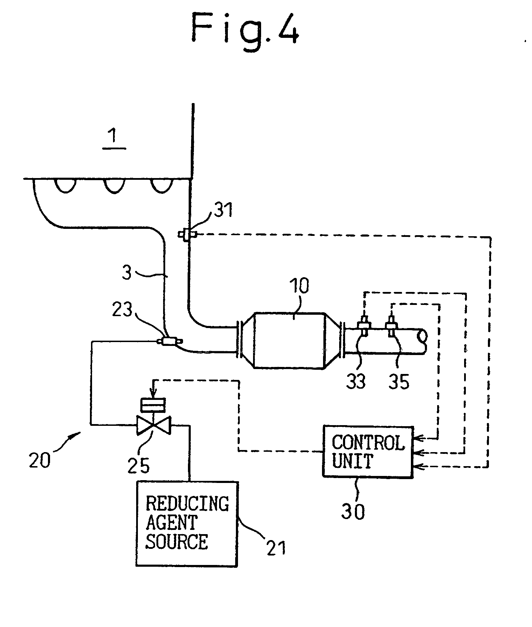

Fig. 4 illustrates the general configuration of a device for carrying out another embodiment of the method according to the present invention. In Fig. 4, reference numerals the same as those in Fig. 2 represent similar elements as those in Fig. 2.

In this embodiment, an oxygen sensor 31 which is capable of detecting the oxygen concentration in the exhaust gas is disposed in the exhaust gas passage 3 upstream of the reducing agent nozzle 23. Further, a temperature sensor 33 for detecting the temperature of the exhaust gas and a $NO_x$ sensor 35 for detecting the $NO_x$ concentration in the exhaust gas are disposed in the exhaust gas passage downstream of the RAP catalyst 10. The control unit 30 monitors the oxygen concentration C, the temperature T and the $NO_x$ concentration $CNO_x$ at a predetermined interval using the respective sensor 31, 33, 35 and calculates the amount of changes $\Delta C$, $\Delta T$ and $\Delta CNO_x$ in the oxygen concentration C, the temperature T and the $NO_x$ concentration $CNO_x$ during the predetermined time interval. Thus, $\Delta C$, $\Delta T$ and $\Delta CNO_x$ represents rates of changes in the oxygen concentration C, the temperature T and the $NO_x$ concentration $CNO_x$, respectively. In this embodiment, the control unit 30 adjusts the amount of the reducing agent injected from the reducing agent nozzle 23 based on $\Delta C$, $\Delta T$ and $\Delta CNO_x$.

For example, if the rate of the change in the oxygen concentration in the exhaust gas $\Delta C$ is a positive value, since this means that the amount of hydrocarbon radicals produced on the RAP catalyst 10 is now increasing, the control unit decreases the amount of the reducing agent injected from the nozzle 23 by a predetermined amount at a time as long as the value of $\Delta C$ is positive. On the other hand, if $\Delta C$ is a negative value, since this means that the amount of hydrocarbon radicals produced on the RAP catalyst 10 is now decreasing, the control unit 30 increasing the injection amount of the reducing agent from the nozzle 23 by the predetermined amount at a time as long as the value of $\Delta C$ is negative.

Similarly, if the rate of the change in the exhaust gas temperature $\Delta T$ is a negative value, the amount of the production of the hydrocarbon radicals is increasing and, if $\Delta T$ is a positive value, the amount of the production of the hydrocarbon radicals is decreasing. Therefore, the control unit 30 decreases the amount of the reducing agent injected from the nozzle 23 by a predetermined amount at a time as long as the value of $\Delta T$ is positive, and reduces the same by a predetermined amount at a time as long as the value of $\Delta T$ is negative.

Further, if the rate of the change $\Delta CNO_x$ in the concentration of $NO_x$ in the exhaust gas is a positive value, this means that the amount of the production of the hydrocarbon radicals on the RAP catalyst 10 is not sufficiently large (or the amount of $NO_x$ in the exhaust gas increases) and the shortage of hydrocarbon radicals has occurred on the RAP catalyst 10. Therefore, in this case, the control unit 30 increases the amount of the reducing agent injected from the nozzle 23 by an amount proportional to the value $\Delta CNO_x$ in order to increase the amount of the hydrocarbon radicals on the RAP catalyst 10 as soon as possible.

As explained above, the amount of production (i.e., the production rate) of hydrocarbon radicals on the RAP catalyst 10 can be adjusted so that a suitable amount of hydrocarbon radicals exist on the RAP catalyst 10 by controlling the injection amount of the reducing agent in accordance with the oxygen concentration and the temperature of the exhaust gas and the $NO_x$ concentration in the exhaust gas downstream of the RAP catalyst 10. Thus, in this embodiment, a high $NO_x$ reduction efficiency of the RAP catalyst 10 can be always achieved.

Though the injection amount of the reducing agent is adjusted in accordance with the $NO_x$ concentration in the exhaust gas downstream of the catalyst 10, the concentration of hydrocarbon radicals (such as the concentration of aldehyde) in the exhaust gas downstream of the catalyst 10 may be used in lieu of, or in addition to, the $NO_x$ concentration. Namely, if the amount of the hydrocarbon radicals on the catalyst 10 is not sufficient compared to the amount of $NO_x$ in the exhaust gas, the amount of hydrocarbon radicals in the exhaust gas downstream of the catalyst 10 decreases. Therefore, the amount of hydrocarbon radicals on the catalyst 10 can be kept at a suitable value, for example, by increasing the amount of the reducing agent injected from the nozzle 23 when the concentration of the hydrocarbon radicals in the exhaust gas downstream of the catalyst 10 decreases.

[5] The fifth embodiment

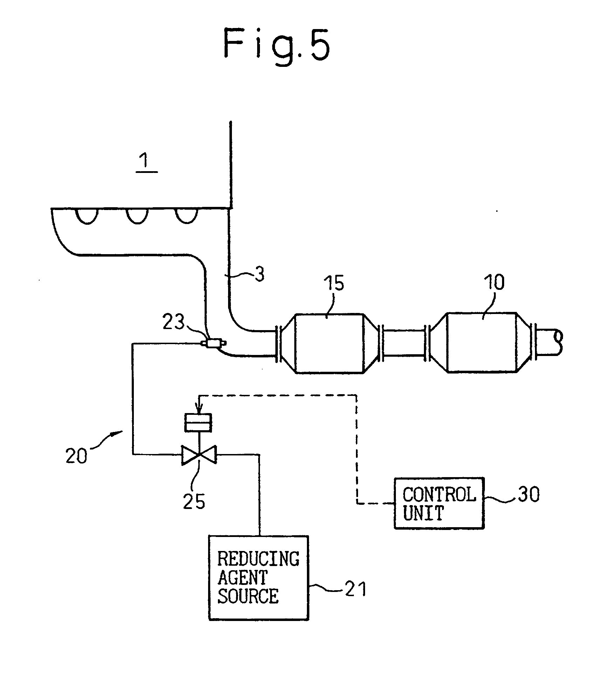

Fig. 5 illustrates a general configuration of the exhaust gas purification device using a fifth embodiment of the method according to the present invention.

In Fig. 5, reference numerals the same as those in Fig. 2 designate elements similar to those in Fig. 2.

In this embodiment, two RAP catalysts 15 and 10 are disposed in series in the exhaust gas passage 3 downstream of the reducing agent nozzle 23. In this embodiment, though the RAP catalyst 10 (the downstream RAP catalyst) has the construction the same as the RAP catalyst 10 in the second embodiment, the RAP catalyst 15 (the upstream RAP catalyst) has a slightly different construction. Namely, though the upstream RAP catalyst 15 also uses oxidizing catalytic components such as Pt, Pd and is capable of producing hydrocarbon radicals by the low temperature oxidizing reactions, the catalyst 15 uses a substrate made of substance such as aluminum and does not adsorb or hold the reducing agent supplied to the catalyst 15. Further, the amounts of the oxidizing catalytic components used in the upstream RAP catalyst 15 is smaller than that of the downstream RAP catalyst 10, thereby the oxidizing ability of the upstream RAP catalyst 15 is smaller than the oxidizing ability of the downstream RAP catalyst 10.

In this embodiment, the engine 1 is operated at a relatively low excess air ratio (for example, around 1.6). Further, the locations of the catalysts 15 and 10 are selected so that the temperatures of the catalysts 15 and 10 do not exceed the upper limit of the temperature range where the low temperature oxidizing reactions occur during the operation of the engine 1.

When the engine 1 is operated, a liquid reducing agent (diesel fuel) is injected into the exhaust gas passage 3 also in this embodiment. When the injected reducing agent reaches the upstream RAP catalyst 15, hydrocarbon radicals are produced by the low temperature oxidizing reactions on the RAP catalyst 15, and $NO_x$ in the exhaust gas is reduced by hydrocarbon radicals produced on the catalyst 15. As explained before, it is preferable to lower the oxidizing ability of the RAP catalyst in order to produce hydrocarbon radicals continuously on the RAP catalyst. In this embodiment, since the oxidizing ability of the upstream RAP catalyst 15 is relatively low, hydrocarbon radicals are continuously produced on the upstream RAP catalyst 15 and, thereby, the $NO_x$ reduction efficiency of the upstream RAP catalyst 15 is improved.

However, when the oxidizing ability of the RAP catalyst is low, though hydrocarbon radicals can be produced continuously, the amount of reducing agent passing through without being oxidized by the RAP catalyst increases. This causes an increase in the concentration of unpurified hydrocarbons in the exhaust gas downstream of the RAP catalyst. If substrate capable of adsorbing hydrocarbon, such as a substrate made of porous zeolite (the substrate similar to that of the downstream RAP catalyst 10) is used for the RAP catalyst, the increase in the hydrocarbon concentration of the downstream exhaust gas may be suppressed to some extent. However, even such a substrate is used, a small amount of hydrocarbons still pass through the RAP catalyst.

Therefore, in this embodiment, the upstream RAP catalyst 15 is not provided with the capability of adsorbing hydrocarbon so that hydrocarbons not oxidized on the upstream RAP catalyst 15 pass through the catalyst 15. All of the hydrocarbons passing through the upstream RAP catalyst 15 flow into the downstream RAP catalyst 10. Since the temperature of the downstream RAP catalyst 10 is also kept in the range where the low temperature oxidizing reactions occur, hydrocarbon radicals are produced on the downstream RAP catalyst 10 from the hydrocarbons passing through the upstream RAP catalyst 15. Therefore, $NO_x$ in the exhaust gas passing through the upstream RAP catalyst 15 is purified by the hydrocarbon radicals produced on the downstream RAP catalyst 10. Since the downstream RAP catalyst 10 has a larger oxidizing ability, hydrocarbons which are not converted into hydrocarbon radicals are oxidized to $CO_2$ and $H_2O$ on the downstream RAP catalyst 10 and hydrocarbons not oxidized on the downstream RAP catalyst 10, if any, are adsorbed by, and held in, the porous zeolite substrate of the downstream RAP catalyst 10. Thus, in this embodiment, substantially no hydrocarbon passes through the downstream RAP catalyst 10 while the $NO_x$ reduction efficiencies of the RAP catalysts 15 and 10 are improved as a whole.

## Claims

1. A method for purifying combustion exhaust gas, comprising the steps of:

> disposing an exhaust gas purifying catalyst (10) in an exhaust gas passage (3) through which combustion exhaust gas flows, said catalyst containing an oxidizing catalytic component having an oxidizing capability;
> supplying a liquid reducing agent and an combustion exhaust gas having an air-fuel ratio equal to or higher than 1.0 to the exhaust gas purifying catalyst (10) through the exhaust gas passage (3) to cause a low temperature oxidizing reaction in which an active substance is produced by oxidation, without accompanying combustion, of the reducing agent and to purify $NO_x$ in the combustion exhaust gas by reacting $NO_x$ with the active substance produced on the catalyst,

> **characterized by**
> keeping the temperature of the exhaust gas purifying catalyst (10) in a specific temperature range above the boiling point of the reducing agent to continuously produce the active substance on the catalyst in order to replenish the amount of the active substance used in the reaction with the $NO_x$.

2. A method as set forth in claim 1, wherein the air-fuel ratio of the combustion exhaust gas is in the range from 1.0 to 1.7.

3. A method as set forth in claim 1, wherein the reducing agent reaches the exhaust gas purifying catalyst (10) in the liquid phase.

4. A method as set forth in claim 1, wherein the temperature range is lower than the activated temperature of the catalytic component having the oxidizing capability.

5. A method as set forth in claim 1, wherein the reducing agent is supplied to the exhaust gas purifying catalyst (10) before the combustion exhaust gas is supplied to the catalyst.

6. A method as set forth in claim 1, wherein the exhaust gas purifying catalyst (10) contains at least one of platinum and palladium as the oxidizing catalytic component and is capable of adsorbing the produced active substance to the surface of the oxidizing catalytic component.

7. A method as set forth in one of claims 1, 5, or 6, wherein the reducing agent is supplied to the exhaust gas purifying catalyst (10) continuously.

8. A method as set forth in claim 1, wherein liquid hydrocarbon is used as the reducing agent.

9. A method as set forth in claim 8, wherein at least one of the amount of the liquid hydrocarbon and the temperature of the exhaust gas purifying catalyst (10) are changed in accordance with the property of the liquid hydrocarbon.

10. A method as set forth in claim 1, wherein the concentration of a specific component in the combustion exhaust gas is detected and the supply condition of the reducing agent is changed in accordance with the concentration of the specific component in the combustion exhaust gas.

11. A method as set forth in claim 1, wherein the exhaust gas purifying catalyst (10) further contains a reducing catalytic component having a reducing capability and wherein the amount of the oxidizing catalytic component and the amount of the reducing catalytic component are selected so that the oxidizing capability of the catalyst derived from the oxidizing catalytic component substantially balances the reducing capability of the catalyst derived from the reducing catalytic component.

12. A method as set forth in claim 1, wherein in the step of disposing the exhaust gas purifying catalyst two exhaust gas purifying catalysts (10, 15) are disposed in the exhaust gas passage (3) in series, with the oxidizing capability of the upstream catalyst (15) being lower than the oxidizing capability of the downstream catalyst (10).

**Patentansprüche**

1. Verfahren zur Reinigung von Verbrennungsabgas, mit den Schritten:

    Anordnen eines Abgasreinigungskatalysators (10) in einer Abgasleitung (3), durch die Verbrennungsabgas strömt, wobei der Katalysator einen Oxidationskatalysatorbestandteil mit Oxidationsvermögen enthält;
    Zuführen eines flüssigen Reduktionsmittels und eines Verbrennungsabgases mit einem Luft-Kraftstoff-Verhältnis von größer oder gleich 1,0 durch die Abgasleitung (3) hindurch zu dem Abgasreinigungskatalysator (10), um eine Niedrigtemperaturoxidationsreaktion zu veranlassen, in der durch Oxidation, aber ohne begleitende Verbrennung des Reduktionsmittels eine aktive Substanz erzeugt wird, und um $NO_x$ in dem Verbrennungsabgas durch Reaktion von $NO_x$ mit der auf dem Katalysator erzeugten aktiven Substanz zu reinigen,

    **gekennzeichnet durch**
    Halten der Temperatur des Abgasreinigungskatalysators (10) in einem bestimmten Temperaturbereich oberhalb des Siedepunkts des Reduktionsmittels, um auf dem Katalysator laufend die aktive Substanz zu erzeugen, damit die in der Reaktion mit dem $NO_x$ verbrauchte Menge der aktiven Substanz wieder ergänzt wird.

2. Verfahren nach Anspruch 1, bei dem das Luft-Kraftstoff-Verhältnis des Verbrennungsabgases in einem Bereich von 1,0 bis 1,7 liegt.

3. Verfahren nach Anspruch 1, bei dem das Reduktionsmittel den Abgasreinigungskatalysator (10) in der flüssigen Phase erreicht.

4. Verfahren nach Anspruch 1, bei dem der Temperaturbereich niedriger als die Aktivierungstemperatur des Katalysatorbestandteils mit dem Oxidationsvermögen ist.

5. Verfahren nach Anspruch 1, bei dem das Reduktionsmittel dem Abgasreinigungskatalysator (10) zugeführt wird, bevor dem Katalysator das Verbrennungsabgas zugeführt wird.

6. Verfahren nach Anspruch 1, bei dem der Abgasreinigungskatalysator (10) als Oxidationskatalysatorbestandteil Platin und/oder Palladium enthält und dazu imstande ist, die erzeugte aktive Substanz an der Oberfläche des Oxidationskatalysatorbestandteils zu adsorbieren.

7. Verfahren nach einem der Ansprüche 1, 5 oder 6, bei dem das Reduktionsmittel dem Abgasreinigungskatalysator (10) laufend zugeführt wird.

8. Verfahren nach Anspruch 1, bei dem als Reduktionsmittel flüssiger Kohlenwasserstoff verwendet wird.

9. Verfahren nach Anspruch 8, bei dem die Menge des flüssigen Kohlenwasserstoffs und/oder die Temperatur des Abgasreinigungskatalysators (10) entsprechend der Beschaffenheit des flüssigen Kohlenwasserstoffs geändert wird/werden.

10. Verfahren nach Anspruch 1, bei dem die Konzentration eines bestimmten Bestandteils in dem Verbrennungsabgas erfasst wird und die Zufuhrbedingung des Reduktionsmittels entsprechend der Konzentration dieses bestimmten Bestandteils in dem Verbrennungsabgas geändert wird.

11. Verfahren nach Anspruch 1, bei dem der Abgasreinigungskatalysator (10) außerdem einen Reduktionskatalysatorbestandteil mit Reduktionsvermögen enthält und bei dem die Menge des Oxidationskatalysatorbestandteils und die Menge des Reduktionskatalysatorbestandteils so gewählt sind, dass das aus dem Oxidationskatalysatorbestandteil abgeleitete Oxidationsvermögen des Katalysators im Großen und Ganzen das aus dem Reduktionskatalysatorbestandteil abgeleitete Reduktionsvermögen des Katalysators ausgleicht.

12. Verfahren nach Anspruch 1, bei dem in dem Schritt Anordnen des Abgasreinigungskatalysators in der Abgasleitung (3) zwei Abgasreinigungskatalysatoren (10, 15) in Reihe angeordnet werden, wobei das Oxidationsvermögen des stromaufwärtigen Katalysators (15) geringer als das Oxidationsvermögen des stromabwärtigen Katalysators (10) ist.

**Revendications**

1. Procédé de purification d'un gaz d'échappement de combustion, comprenant les étapes consistant à :

    disposer un catalyseur de purification de gaz d'échappement (10) dans un conduit de gaz d'échappement (3) à travers lequel le gaz d'échappement de combustion circule, ledit catalyseur contenant un composant catalytique d'oxydation présentant une capacité d'oxydation,

fournir un agent de réduction liquide et un gaz d'échappement de combustion présentant un rapport air-carburant supérieur ou égal à 1,0 au catalyseur de purification de gaz d'échappement (10) par l'intermédiaire du conduit de gaz d'échappement (3) afin de provoquer une réaction d'oxydation à basse température où une substance active est produite par oxydation, sans combustion concomitante, de l'agent de réduction et pour purifier les $No_x$ dans le gaz d'échappement de combustion en faisant réagir les $No_x$ avec les substances actives produites sur le catalyseur,

**caractérisé par**

le maintien de la température du catalyseur de purification de gaz d'échappement (10) dans une plage de températures spécifique au-dessus du point d'ébullition de l'agent de réduction pour produire en continu la substance active sur le catalyseur de manière à renouveler la quantité de substance active utilisée dans la réaction avec les $No_x$.

2. Procédé selon la revendication 1, dans lequel le rapport air-carburant du gaz d'échappement de combustion se trouve dans la plage de 1,0 à 1,7.

3. Procédé selon la revendication 1, dans lequel l'agent de réduction atteint le catalyseur de purification de gaz d'échappement (10) dans la phase liquide.

4. Procédé selon la revendication 1, dans lequel la plage de température est inférieure à la température d'activation du composant catalytique présentant la capacité d'oxydation.

5. Procédé selon la revendication 1, dans lequel l'agent de réduction est appliqué au catalyseur de purification de gaz d'échappement (10) avant que le gaz d'échappement de combustion ne soit appliqué au catalyseur.

6. Procédé selon la revendication 1, dans lequel le catalyseur de purification de gaz d'échappement (10) contient au moins un élément parmi du platine et du palladium en tant que composant catalytique d'oxydation et est capable d'adsorber la substance active produite sur la surface du composant catalytique d'oxydation.

7. Procédé selon l'une des revendications 1, 5 ou 6, dans lequel l'agent de réduction est appliqué au catalyseur de purification de gaz d'échappement (10) en continu.

8. Procédé selon la revendication 1, dans lequel l'hydrocarbure liquide est utilisé en tant qu'agent de réduction.

9. Procédé selon la revendication 8, dans lequel au moins l'une de la quantité de l'hydrocarbure liquide et de la température du catalyseur de purification des gaz d'échappement (10) est modifié conformément à la propriété de l'hydrocarbure liquide.

10. Procédé selon la revendication 1, dans lequel la concentration d'un composant spécifique dans le gaz d'échappement de combustion est détectée et la condition d'alimentation de l'agent de réduction est modifiée conformément à la concentration du composant spécifique dans le gaz d'échappement de combustion.

11. Procédé selon la revendication 1, dans lequel le catalyseur de purification de gaz d'échappement (10) contient en outre un composant catalytique de réduction présentant une capacité de réduction et dans lequel la quantité du composant catalytique d'oxydation et la quantité du composant catalytique de réduction sont sélectionnées de sorte que la capacité d'oxydation du catalyseur obtenue à partir du composant catalytique d'oxydation équilibre en grande partie la capacité de réduction du catalyseur obtenue à partir du composant catalytique de réduction.

12. Procédé selon la revendication 1, dans lequel au cours de l'étape consistant à disposer le catalyseur de purification de gaz d'échappement, deux catalyseurs de purification de gaz d'échappement (10, 15) sont disposés en série dans le conduit de gaz d'échappement (3), la capacité d'oxydation du catalyseur en amont (15) étant inférieure à la capacité d'oxydation du catalyseur en aval (10).

# Fig.1

# Fig.2

# Fig.3

# Fig.4

# Fig.5